# EUROPEAN PATENT APPLICATION

(11) **EP 4 789 880 A1**
(43) Date of publication of application: **12.08.2026**
(21) Application number: 25156520.6
(22) Date of filing: 07.02.2025
(51) Int. Cl.: B60G 3/20, B60G 7/00

(54) **A MOBILITY VEHICLE WITH IMPROVED SUSPENSION SYSTEM**

(71) Applicant: Rhino R, SIA, 5052 Ikskile (LV)
(72) Inventor: Jurgelis, Raimonds, LV-5052 Ikskile (LV)
(74) Representative: Kromanis, Artis

(57) **Abstract**

The present invention relates to mobility vehicles and their suspension systems. A mobility vehicle comprising a frame (1), four wheels (4) and electric motor (5) for each wheel (4). The vehicle comprises a front suspension system (10) comprising an upper control arm (11), a lower control arm (12), a motor carrier (13), a steering unit (14) and a shock absorber (15). The vehicle comprises a rear suspension system (20) comprising an upper control arm (21), a lower control arm (22), a motor axis carrier (23), a motor suspension carrier (24) and a shock absorber (15).

## Description

### Field of the invention

The present invention relates to mobility vehicles and their suspension systems.

### Background of the invention

Various suspension systems exist. Basically, car suspension systems fall into two main categories: independent and dependent suspension. Independent suspension allows each wheel to move separately, enhancing comfort and handling. Common types include MacPherson strut system, which are simple and cost-effective, but offer limited camber control, double wishbone systems, multi-link systems, trailing arm suspensions for off-road durability, and semi-trailing arm systems. Dependent suspensions, where both wheels on an axle move together, include leaf spring setups for trucks due to their high load capacity but rough ride, and coil spring solid axles, which provide durability in off-road vehicles but lack precision. Specialized systems include air suspension, offering adjustable ride height but being costly and maintenance-intensive, hydropneumatics suspension, which provides self-levelling but is complex, active suspension, dynamically adjusting for optimal performance in high-end vehicles but also complicated and expensive, and torsion bar suspension, known for its durability and adjustable height but inferior to coil springs in performance. The choice of suspension depends on the vehicle's purpose, balancing comfort, handling, durability, and cost for applications ranging from daily driving to racing, off-roading, and heavy-duty use.

International application publication No. WO2010044998 discloses suspension system for a personal mobility vehicle that includes a left suspension arm and a right suspension arm. The left suspension arm is coupled to a first wheel and is vertically pivotable about a first horizontal pivot. Similarly, the right suspension arm is coupled to a second wheel and is vertically pivotable about a second horizontal pivot. A longitudinal centre line of the personal mobility vehicle may be located between the first wheel and the second wheel, wherein the first wheel is on the left side of the centre line, the second wheel is on the right side of the centre line, the first horizontal pivot is on the right side of the centre line and the second horizontal pivot is on the left side of the centre line.

The US patent application publication No. US2007045014 discloses a personal mobility vehicle comprising a frame that includes a footrest, the footrest having a front edge. Two or more ground engaging rear wheels are connected to the frame and configured to support the frame. A ground engaging front wheel is connected to the frame and mounted for rotation about a vertical axis so that the front wheel is a steerable wheel, the front wheel having a centre line. The centre line of the front wheel is positioned rearward of the front edge of the footrest and forward of the rear wheels. A drive motor is connected to either the front wheel or the rear wheels, the drive motor being configured to drive the personal mobility vehicle. A steering mechanism is connected to the front wheel and configured to steer the front wheel.

In present situation it is necessary to design a suspension system for a mobility vehicle with in-wheel electric motors, which is relatively simple but at the same time compact without losing performance, such as stability, ease of steering and road following.

### Summary of the invention

The aim is achieved by a design of a mobility vehicle comprising a frame having a front frame part and a rear frame part, a first set of wheels coupled to the front frame part, a second set of wheels coupled to the rear frame part. The vehicle also comprises four electric motors having non-rotating axle and a rotating rim, wherein each electric motor is mounted in each wheel making it in-wheel motor. The vehicle comprises a front suspension system for the first set of wheels. The front suspension system comprises an upper control arm, a lower control arm, a motor carrier, a steering unit and a shock absorber.

The upper control arm of the front suspension system has a first hollow cylinder end and a second end. The upper control arm of the front suspension system via its first hollow cylinder end is hingedly coupled to the front frame part. The lower control arm of the front suspension system has a first hollow cylinder end and a second end. The lower control arm of the front suspension system via its first hollow cylinder end is hingedly coupled to the front frame part.

The motor carrier of the front suspension system comprises a cylindrical groove, in which the non-rotating axle of the electric motor is fixed, and a cylindrical protrusion. The steering unit of the front suspension system comprises a cylindrical hole, an upper hollow cylinder end and a lower hollow cylinder end. The cylindrical protrusion of the motor carrier is inserted in rotatable manner into the cylindrical hole of the steering unit. The steering unit via its upper hollow cylinder end is hingedly coupled to the second end of the upper control arm and the steering unit via its lower hollow cylinder end is hingedly coupled to the second end of the lower control arm.

The shock absorber of the front suspension system has a first end and a second end. The first end of the shock absorber is hingedly coupled to the front frame part at the same place where the first hollow cylinder end of the upper control arm is hingedly coupled to the front frame part. The second end of the shock absorber is hingedly coupled to the lower hollow cylinder end of the steering unit.

The front suspension system comprises hinge axles, wherein one hinge axle is inserted into the first hollow cylinder end of the upper control arm, one hinge axle is inserted into the first hollow cylinder end of the lower control arm, one hinge axle is inserted into the upper hollow cylinder end of the steering unit, one hinge axle is inserted into the lower hollow cylinder end of the steering unit.

Moreover, the centre axis of the first hollow cylinder end of the upper control arm, the first hollow cylinder end of the lower control arm, the upper hollow cylinder end of the steering unit, the lower hollow cylinder end of the steering unit of the front suspension system are arranged parallel to a longitudinal axis of the frame.

The vehicle comprises a rear suspension system for the second set of wheels. The rear suspension system comprises an upper control arm, a lower control arm, a motor axis carrier, a motor suspension carrier and the shock absorber.

The upper control arm of the rear suspension system has a first hollow cylinder end and a second end. The upper control arm via its first hollow cylinder end is hingedly coupled to the rear frame part. The lower control arm of the rear suspension system has a first hollow cylinder end, a second end and a middle bracket. The lower control arm via its first hollow cylinder end is hingedly coupled to the rear frame part.

The motor axis carrier of the rear suspension system comprises a cylindrical groove, in which the non-rotating axle of the electric motor is fixed. The motor suspension carrier of the rear suspension system is fixed to the motor axis carrier (23), wherein the motor suspension carrier comprises an upper hollow cylinder end and a lower hollow cylinder end. The motor suspension carrier via its upper hollow cylinder end is hingedly coupled to the second end of the upper control arm and the motor suspension carrier via its lower hollow cylinder end is hingedly coupled to the second end of the lower control arm.

The shock absorber of the rear suspension system is basically the same as it is for the front suspension system. The shock absorber has a first end and a second end. The first end of the shock absorber is hingedly coupled to the rear frame part and the second end of the shock absorber is hingedly coupled to the middle bracket of the lower control arm.

The rear suspension system comprises hinge axles, wherein one hinge axle is inserted into the first hollow cylinder end of the upper control arm, one hinge axle is inserted into the first hollow cylinder end of the lower control arm, one hinge axle is inserted into the upper hollow cylinder end of the motor suspension carrier, one hinge axle is inserted into the lower hollow cylinder end of the motor suspension carrier.

Moreover, centre axis of the first hollow cylinder end of the upper control arm, the first hollow cylinder end of the lower control arm, the upper hollow cylinder end of the motor suspension carrier and the lower hollow cylinder end of the motor suspension carrier of the rear suspension system are arranged parallel to a longitudinal axis of the frame.

### Brief description of the drawings

The drawings illustrate through examples embodiments of the invention falling within the scope of the invention as defined by the claims.
Fig. 1 is perspective view of exploded view of a mobility vehicle comprising a front suspension system (10) and a rear suspension system (20).
Fig. 2 is a perspective view of a front suspension system (10) including an exploded view of a left side of the front suspension system (10).
Fig. 3 is a top view of the front suspension system (10) as seen in Fig. 2.
Fig. 4 is a perspective view of a rear suspension system (20) including an exploded view of a left side of the front suspension system (20).
Fig. 5 is a top view of the rear suspension system (10) as seen in Fig. 4.
Fig. 6 is an enlarged view of the right side of the front suspension system (10).
Fig. 7 is an enlarged view of the right side of the rear suspension system (20).

### Detailed description of the embodiments

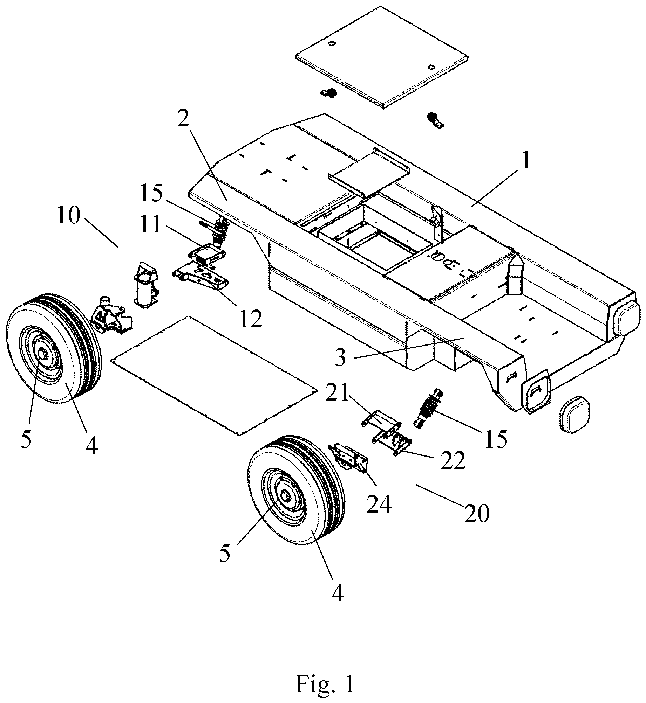

Fig. 1 is perspective view of exploded view of a mobility vehicle comprising a frame (1) having a front frame part (2) and a rear frame part (3), a first set of wheels (4) coupled to the front frame part (2), a second set of wheels (4) coupled to the rear frame part (3), four electric motors (5) having non-rotating axle (6) and a rotating rim (7). Each electric motor (5) is mounted in each wheel (4). The vehicle also comprises a front suspension system (10) and a rear suspension system (20).

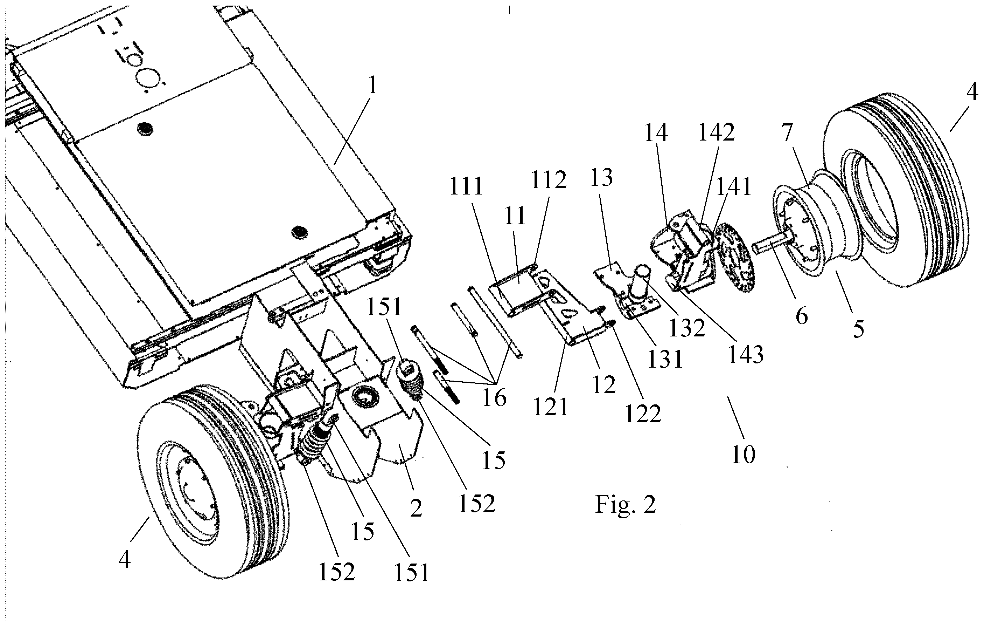

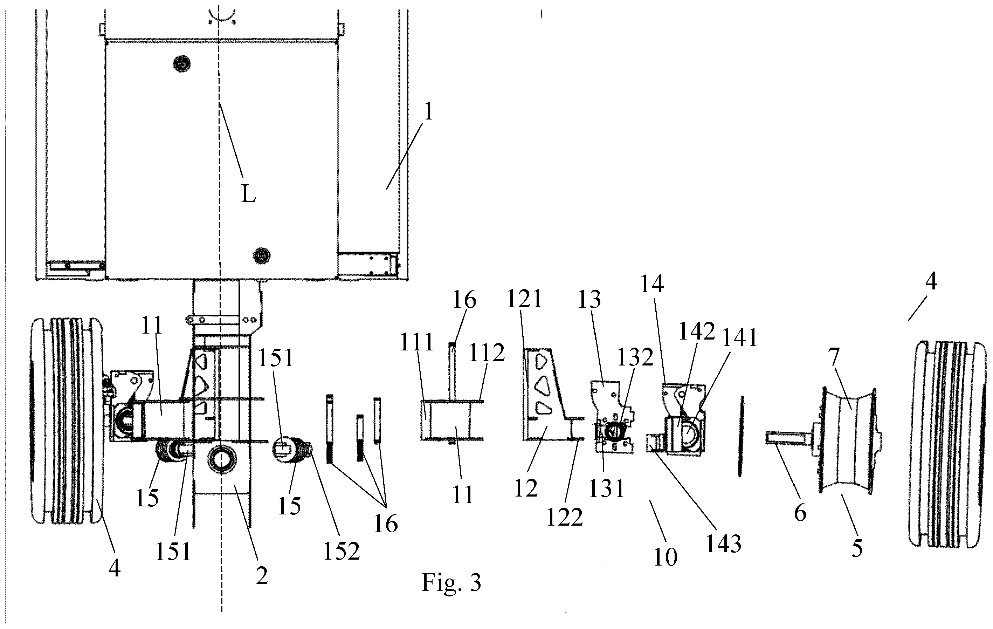

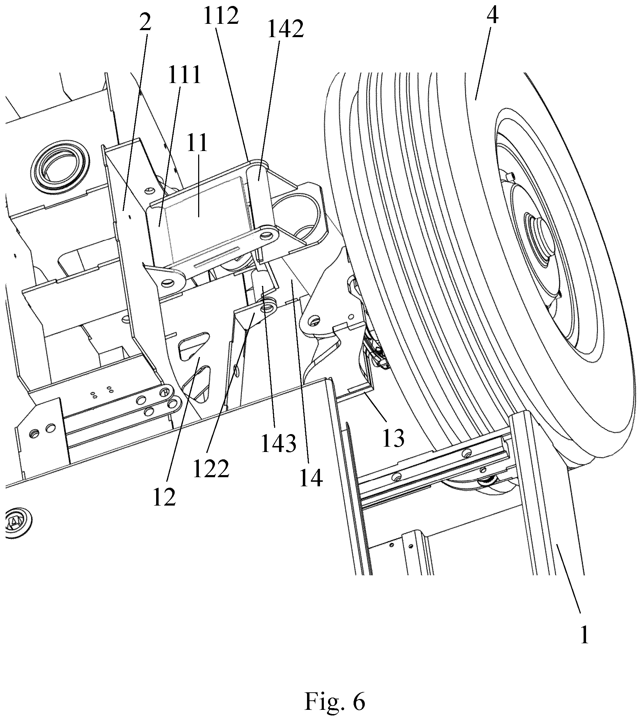

Fig. 2 is a perspective view of a front suspension system (10) including an exploded view of a left side of the front suspension system (10). Fig. 3 is a top view of the front suspension system (10) as seen in Fig. 2. Fig. 6 is an enlarged view of the right side of the front suspension system (10). The front suspension system (10) on one side comprises an upper control arm (11), a lower control arm (12), a motor carrier (13), a steering unit (14), a shock absorber (15). The same set is on another side of the front frame part (2). The upper control arm (11) has a first hollow cylinder end (111) and a second end (112). The upper control arm (11) via its first hollow cylinder end (111) is hingedly coupled to the front frame part (2). The lower control arm (12) has a first hollow cylinder end (121) and a second end (122). The lower control arm (12) via its first hollow cylinder end (121) is hingedly coupled to the front frame part (2). The motor carrier (13) comprises a cylindrical groove (131), in which the non-rotating axle (6) of the electric motor (5) is fixed, and a cylindrical protrusion (132). The steering unit (14) comprises a cylindrical hole (141), an upper hollow cylinder end (142) and a lower hollow cylinder end (143). The cylindrical protrusion (132) of the motor carrier (13) is inserted in rotatable manner into the cylindrical hole (141) of the steering unit (14). The steering unit (14) via its upper hollow cylinder end (142) is hingedly coupled to the second end (112) of the upper control arm (11) and the steering unit (14) via its lower hollow cylinder end (143) is hingedly coupled to the second end (122) of the lower control arm (12). The shock absorber (15) having a first end (151) and a second end (152). The first end (151) of the shock absorber (15) is hingedly coupled to the front frame part (2) at the same place where the first hollow cylinder end (111) of the upper control arm (11) is hingedly coupled to the front frame part (2). The second end (152) of the shock absorber (15) is hingedly coupled to the lower hollow cylinder end (143) of the steering unit (14).

The front suspension system (10) comprises hinge axles (16). One hinge axle (16) is inserted into the first hollow cylinder end (111) of the upper control arm (11), one hinge axle (16) is inserted into the first hollow cylinder end (121) of the lower control arm (12), one hinge axle (16) is inserted into the upper hollow cylinder end (142) of the steering unit (14), and one hinge axle (16) is inserted into the lower hollow cylinder end (143) of the steering unit (14) (see Figs. 2 and 3).

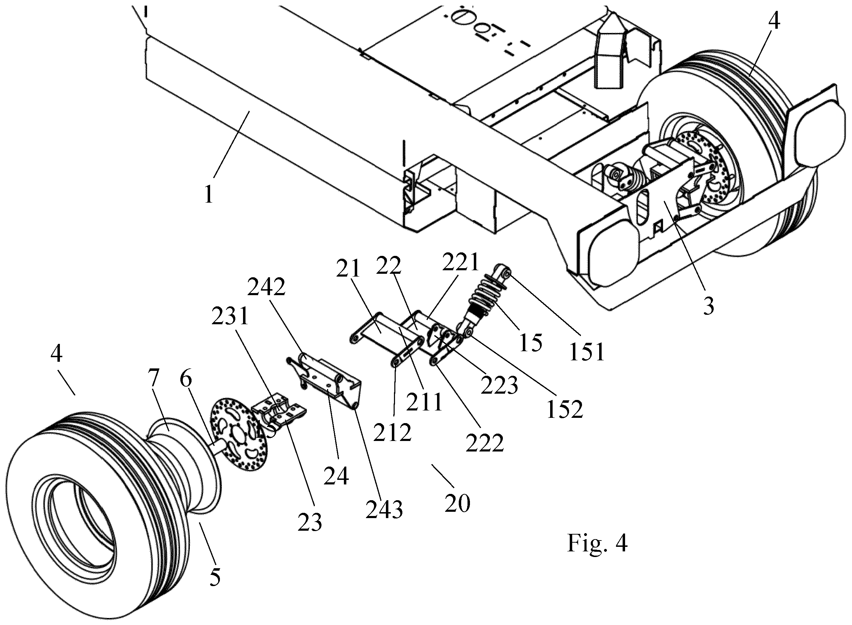

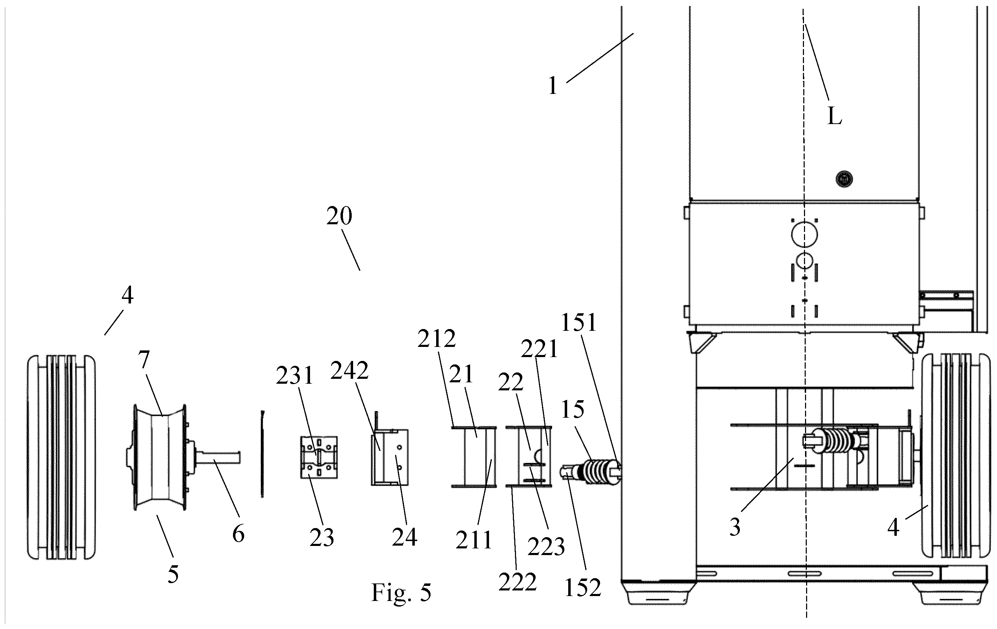

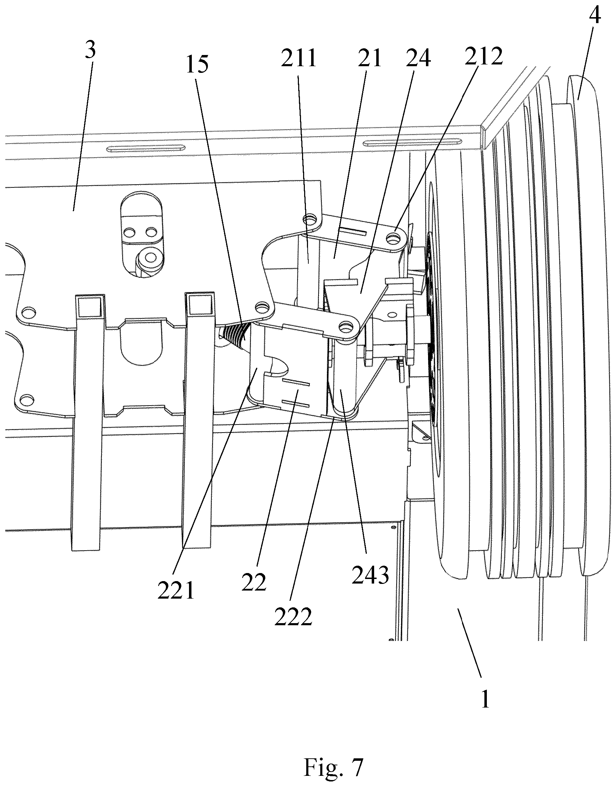

Fig. 4 is a perspective view of a rear suspension system (20) including an exploded view of a left side of the front suspension system (20). Fig. 5 is a top view of the rear suspension system (10) as seen in Fig. 4. Fig. 7 is an enlarged view of the right side of the rear suspension system (20). The rear suspension system (20) on one side comprises an upper control arm (21), a lower control arm (22), a motor suspension carrier (24) and the shock absorber (15), which is like for the front suspension system (10). The upper control arm (21) has a first hollow cylinder end (211) and a second end (212). The upper control arm (21) via its first hollow cylinder end (211) is hingedly coupled to the rear frame part (3). The lower control arm (22) has a first hollow cylinder end (221), a second end (222) and a middle bracket (223). The lower control arm (22) via its first hollow cylinder end (221) is hingedly coupled to the rear frame part (2). The motor axis carrier (23) comprising a cylindrical groove (231), in which the non-rotating axle (6) of the electric motor (5) is fixed. The motor suspension carrier (24) is fixed to the motor axis carrier (23). The motor suspension carrier (24) comprises an upper hollow cylinder end (242) and a lower hollow cylinder end (243). The motor suspension carrier (24) via its upper hollow cylinder end (242) is hingedly coupled to the second end (212) of the upper control arm (21) and the motor suspension carrier (24) via its lower hollow cylinder end (243) is hingedly coupled to the second end (222) of the lower control arm (22). The shock absorber (15) has a first end (151) and a second end (152). The first end (151) of the shock absorber (15) is hingedly coupled to the rear frame part (2) and the second end (152) of the shock absorber (15) is hingedly coupled to the middle bracket (223) of the lower control arm (22).

The rear suspension system (20) also comprises hinge axles (16) as it is illustrated for the front suspension system (10) in Figs. 2 and 3. The hinge axles (16) of the rear suspension system (20) are just not shown in the figures, but they look and functions in the same manner as the hinge axles (16) for the front suspension system (10). One hinge axle (16) is inserted into the first hollow cylinder end (211) of the upper control arm (21), one hinge axle (16) is inserted into the first hollow cylinder end (221) of the lower control arm (22), one hinge axle (16) is inserted into the upper hollow cylinder end (242) of the motor suspension carrier (24), and another one hinge axle (16) is inserted into the lower hollow cylinder end (243) of the motor suspension carrier (24).

As it can be seen in Figs. 1, 2, 3 and 6, the centre axis of the first hollow cylinder end (111) of the upper control arm (11), the first hollow cylinder end (121) of the lower control arm (12), the upper hollow cylinder end (142) of the steering unit (14), the lower hollow cylinder end (143) of the steering unit (14) of the front suspension system (10) are arranged parallel to a longitudinal axis (L) of the frame (1).

As it can be seen in Figs. 1, 4, 5 and 7, the centre axis of the first hollow cylinder end (211) of the upper control arm (21), the first hollow cylinder end (221) of the lower control arm (22), the upper hollow cylinder end (242) of the motor suspension carrier (24) and the lower hollow cylinder end (243) of the motor suspension carrier (24) of the rear suspension system (20) are arranged parallel to a longitudinal axis (L) of the frame (1).

While the invention may be susceptible to various modifications and alternative forms, specific embodiments of which have been shown by way of example in the figures and have been described in detail herein, it should be understood that the invention is not intended to be limited to the particular forms disclosed. Rather, the invention is defined by the following claims.

## Claims

1. A mobility vehicle comprising:
- a frame (1) having a front frame part (2) and a rear frame part (3);
- a first set of wheels (4) coupled to the front frame part (2);
- a second set of wheels (4) coupled to the rear frame part (3);
- four electric motors (5) having non-rotating axle (6) and a rotating rim (7), wherein each electric motor (5) is mounted in each wheel (4);
- a front suspension system (10) for the first set of wheels (4), wherein the front suspension system (10) comprises:
-- an upper control arm (11) having a first hollow cylinder end (111) and a second end (112), wherein the upper control arm (11) via its first hollow cylinder end (111) is hingedly coupled to the front frame part (2);
-- a lower control arm (12) having a first hollow cylinder end (121) and a second end (122), wherein the lower control arm (12) via its first hollow cylinder end (121) is hingedly coupled to the front frame part (2);
-- a motor carrier (13) comprising a cylindrical groove (131), in which the non-rotating axle (6) of the electric motor (5) is fixed, and a cylindrical protrusion (132);
-- a steering unit (14) comprising a cylindrical hole (141), an upper hollow cylinder end (142) and a lower hollow cylinder end (143), wherein the cylindrical protrusion (132) of the motor carrier (13) is inserted in rotatable manner into the cylindrical hole (141) of the steering unit (14), and wherein the steering unit (14) via its upper hollow cylinder end (142) is hingedly coupled to the second end (112) of the upper control arm (11) and the steering unit (14) via its lower hollow cylinder end (143) is hingedly coupled to the second end (122) of the lower control arm (12);
-- a shock absorber (15) having a first end (151) and a second end (152), wherein the first end (151) of the shock absorber (15) is hingedly coupled to the front frame part (2) at the same place where the first hollow cylinder end (111) of the upper control arm (11) is hingedly coupled to the front frame part (2), and wherein the second end (152) of the shock absorber (15) is hingedly coupled to the lower hollow cylinder end (143) of the steering unit (14);
- a rear suspension system (20) for the second set of wheels (4), wherein the rear suspension system (20) comprises:
-- an upper control arm (21) having a first hollow cylinder end (211) and a second end (212), wherein the upper control arm (21) via its first hollow cylinder end (211) is hingedly coupled to the rear frame part (3);
-- a lower control arm (22) having a first hollow cylinder end (221), a second end (222) and a middle bracket (223), wherein the lower control arm (22) via its first hollow cylinder end (221) is hingedly coupled to the rear frame part (2);
-- a motor axis carrier (23) comprising a cylindrical groove (231), in which the non-rotating axle (6) of the electric motor (5) is fixed;
-- a motor suspension carrier (24) fixed to the motor axis carrier (23), wherein the motor suspension carrier (24) comprises an upper hollow cylinder end (242) and a lower hollow cylinder end (243), and wherein the motor suspension carrier (24) via its upper hollow cylinder end (242) is hingedly coupled to the second end (212) of the upper control arm (21) and the motor suspension carrier (24) via its lower hollow cylinder end (243) is hingedly coupled to the second end (222) of the lower control arm (22);
-- a shock absorber (15) having a first end (151) and a second end (152), wherein the first end (151) of the shock absorber (15) is hingedly coupled to the rear frame part (2) and the second end (152) of the shock absorber (15) is hingedly coupled to the middle bracket (223) of the lower control arm (22).

2. The mobility vehicle according to claim 1, wherein the front suspension system (10) comprises hinge axles (16), wherein one hinge axle (16) is inserted into the first hollow cylinder end (111) of the upper control arm (11), wherein one hinge axle (16) is inserted into the first hollow cylinder end (121) of the lower control arm (12).

3. The mobility vehicle according to claim 1 or 2, wherein front suspension system (10) comprises hinge axles (16), wherein one hinge axle (16) is inserted into the upper hollow cylinder end (142) of the steering unit (14), wherein one hinge axle (16) is inserted into the lower hollow cylinder end (143) of the steering unit (14).

4. The mobility vehicle according to any one of claim 1 to 3, wherein rear suspension system (20) comprises hinge axles (16), wherein one hinge axle (16) is inserted into the first hollow cylinder end (211) of the upper control arm (21), wherein one hinge axle (16) is inserted into the first hollow cylinder end (221) of the lower control arm (22).

5. The mobility vehicle according to any one of claim 1 to 4, wherein rear suspension system (20) comprises hinge axles (16), wherein one hinge axle (16) is inserted into the upper hollow cylinder end (242) of the motor suspension carrier (24), wherein one hinge axle (16) is inserted into the lower hollow cylinder end (243) of the motor suspension carrier (24).

6. The mobility vehicle according to any one of claim 1 to 5, wherein centre axis of the first hollow cylinder end (111) of the upper control arm (11), the first hollow cylinder end (121) of the lower control arm (12), the upper hollow cylinder end (142) of the steering unit (14), the lower hollow cylinder end (143) of the steering unit (14) of the front suspension system (10) are arranged parallel to a longitudinal axis (L) of the frame (1).

7. The mobility vehicle according to any one of claim 1 to 6, wherein centre axis of the first hollow cylinder end (211) of the upper control arm (21), the first hollow cylinder end (221) of the lower control arm (22), the upper hollow cylinder end (242) of the motor suspension carrier (24) and the lower hollow cylinder end (243) of the motor suspension carrier (24) of the rear suspension system (20) are arranged parallel to a longitudinal axis (L) of the frame (1).
